# EUROPEAN PATENT SPECIFICATION

(11) **EP 2 719 670 B1**
(45) Date of publication and mention of the grant of the patent: **14.08.2019**
(21) Application number: 12306268.9
(22) Date of filing: 12.10.2012
(51) Int. Cl.: C03B 17/06, C03B 23/02, C03B 40/02, C03B 21/04, C03B 23/03, C03B 23/035, G02B 5/10, G02B 27/14

(54) **Methods for forming glass elliptical and spherical shell mirror blanks**
Verfahren zur Bildung von elliptischen und kugelförmigen Glashüllen-Spiegelrohlinge
Procédés pour former du verre elliptique et des ébauches de miroir à coque sphérique

(43) Date of publication of application: 16.04.2014
(73) Proprietor: Corning Incorporated, Corning, NY 14831 (US)
(72) Inventor: Dannoux, Thierry, 77210 AVON (FR)
(74) Representative: Cabinet Beau de Loménie

(56) References cited:
- WO-A1-97/19027
- WO-A1-2010/024900
- WO-A2-2008/066667
- DE-B3- 10 313 889
- FR-A1- 2 893 610
- GB-A- 2 264 890
- JP-A- 62 128 935
- US-A- 5 571 598
- US-A1- 2009 117 332
- US-A1- 2010 126 222

## Description

### FIELD

The present disclosure relates to methods for forming glass elliptical and spherical shell mirror blanks, and particularly to methods for forming precision millimeter-scale-radius elliptical and spherical shell mirror blanks suitable for mass-production.

### BACKGROUND

There is a need for low cost, high efficiency (good precision) focusing mirror optics, particularly for LED light source applications, ranging from general lighting applications, to LED backlights for display applications, to more specialized LED-based light source applications. In all of these applications, energy efficiency and lifetime are key performance measures for the LED source, with both being impacted favorably by increasing thermal efficiency.

An example of the use of high efficiency focusing mirror optics employed to improve thermal efficiency of an LED source is given in US patent US7394188B2. This application discloses an LED light source optical design employing a low-pass dichroic mirror deposited on a micro- or milli- meter scale mirror, with the mirror positioned near an LED and structured to pass visible wavelengths while reflecting UV light onto a phosphorescent material, for conversion to visible wavelengths, thus improving overall thermal efficiency (see, e.g., FIG. 9 and the associated description). Use of other types of dichroic mirrors is also possible: depending upon the emission spectrum of the LED and on the type of wavelength conversion material or device used, an IR-reflective mirror or a mirror that passes visual wavelengths while reflecting both IR and UV, for example, may be useful.

Micro-optical components are typically formed of injection molded polymer, presenting attractively low fabrication cost but also having inherent technical limitations, such as limited spectral window for optical transmission, and material stability issues over time. Materials used to form certain dichroic mirrors and deposition techniques for such materials may also be incompatible with some polymer materials.

US patent application US 2009/0117332 discloses a method enabling high-precision glass parts of a relatively large size (such as mirrors for a solar concentrator) to be manufactured in an economical manner. A multi-cavity mold prevents warping of a glass sheet during a slumping process by utilizing multiple vacuum ports, which may be supplemented by stiffening features formed in the mold. The inner concave surfaces formed in the cavities of the multi-cavity mold are formed without contact with any solid object. US patent application 2010/0126222 discloses an apparatus for forming shaped articles from a sheet of material. Said apparatus comprises a first mold with a network of gutters delimiting cavities and a second mold with a network of protuberances, the network of protuberances having a network protuberance profile complementary to the network gutter profile. Using said apparatus allows obtaining molded structures with pristine upper surfaces ("141").

It is accordingly desirable to have an efficient method of forming high-surface-quality spherical or elliptical mirror blanks formed in glass rather than in polymer, and desirable that such method is readily adaptable to mass production. Claims 1 and 2 define production methods according to the invention. Preferred embodiments of the invention are defined in the dependent claims.

### BRIEF DESCRIPTION OF THE DRAWINGS

Figure 1 is an example (prior art) application for mirrors formed from blanks made according to methods of the present disclosure;
Figure 2 is a flow diagram outlining certain steps in a method according to one aspect of the present disclosure;
Figures 3A and 3B are cross-sectional representations of cooperating mold halves and a glass sheet being reformed between them according to one aspect of an embodiment of a method of the present disclosure;
Figures 4A and 4B are cross-sectional representations of a mold with through-holes and an optional cooperating mold and a glass sheet being reformed according to another aspect of a method of the present disclosure;
Figures 5A and 5B are perspective and cross-sectional views, respectively, illustrating reformation of a glass sheet according to yet another embodiment of a method according to the present disclosure;
Figures 6A and 6B are perspective and cross-sectional views, respectively, illustrating reformation of a glass sheet according to still another embodiment of a method according to the present disclosure;
Figures 7A and 7B are plan and cross-sectional views, respectively, of a mold plate useful in conjunction with certain embodiments methods according to the present disclosure; and
Figure 8 is a cross-sectional view of a protrusion on a mold surface useful in the context of certain methods of the present disclosure.

### DETAILED DESCRIPTION

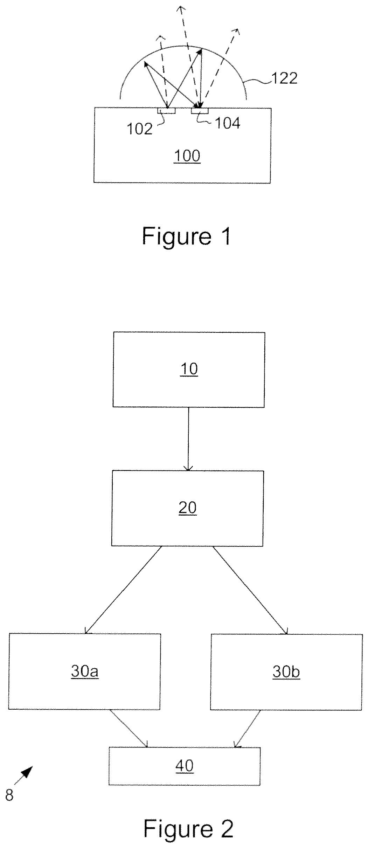

Figure 1 is a cross-sectional diagrammatic representation of an LED-based light source comprising a substrate 100 on which (or in which) are formed or positioned an LED 102 and a phosphorescent material or other wavelength-converting material, device, or structure 104. A focusing mirror 122 (meaning a mirror capable of concentrating radiation rather than merely reflecting it) having selective reflectivity (that is, a dichroic mirror) is employed to reflect undesired wavelengths from the LED (represented by the solid rays) back and onto the phosphorescent material or other wavelength-converting material, device, or structure 104. Desirable wavelengths (represented by the dashed rays in the figure) pass through the mirror 122, whether originating in the wavelength-converting structure 104, or both there and in the LED itself, as may be the case in some applications. The substrate 100 around the LED 102 and the phosphorescent material or other wavelength-converting material, device, or structure 104 is desirably made reflective or provided with a reflector so as to redirect at least the desirable radiation that impinges thereon, if not a broad spectrum. This basic LED light source device structure is known (see, e.g., US patent US7394188B2, but, for the practical manufacture and use of such devices, a need exists for a reliable, efficient method of providing glass mirror blanks for use as mirror blanks for spherical or ellipsoidal focusing mirrors, so as to redirect radiation from the LED 102 to a phosphorescent material or other wavelength converter 104.

Figure 2 is a flow diagram illustrating certain steps in a method for producing glass shell structures for use as focusing mirror blanks according to one aspect of the present disclosure. The method 8 represented in Figure 2 includes the step 10 of providing a glass sheet, the step 20 of heating the glass sheet or otherwise providing for the temperature of the glass sheet to be at a reforming point, near but below the softening point of the glass (typically 15 to 40° C below the softening point, desirably at a viscosity within the range of from 10⁴ to 10⁵ poises) so as to allow well controlled permanent deformation (reformation) of the sheet. The method 8 further includes two alternate steps, either of which may be used to produce a glass shell structure having a pristine convex surface, or in other words, a convex surface not contacted (except by gases) during the reforming process, a surface requiring (and receiving) no further surface finishing (such as by etching or polishing). Step 30a comprises reforming the glass sheet so as to form an array of glass shell structures therein by pressing the sheet, wherein pressing is performed using a positive or male mold surface comprising an array of protrusions pressed against and in contact with the respective inner concave surfaces and without contacting the resulting respective outer convex surfaces with any solid object. The alternative, step 30b comprises reforming the glass sheet so as to form an array of glass shell structures therein by vacuum- or differential-pressure-forming the sheet, using a mold surface comprising an array of through holes with the shell structures formed by vacuum- or differential-pressure- forming of the sheet against the mold surface with the glass shell structures formed by relative gas pressure pressing them into the array of through holes without contacting the resulting respective outer convex surfaces (positioned in the holes) with any solid object, and without contacting the inner resulting respective inner concave surfaces with any solid object. After the one or the other of the two alternative steps 30a and 30b is performed, then the resulting glass sheet, now reformed to have an array of glass shell structures formed therein, is removed from the molds or molding surfaces and cooled down and/or annealed in step 40.

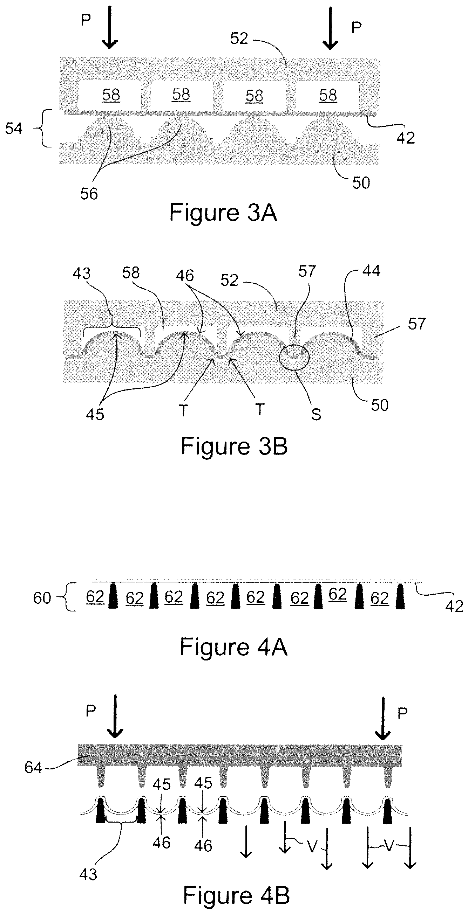

The alternative steps 30a and 30b may be better understood with reference to Figures 3A and 3B and 4A and 4B.

Figures 3A and 3B are cross-sectional representations of cooperating mold halves and a glass sheet being reformed between them according the alternative step 30a. In Figure 3A is shown a glass sheet 42. The sheet is heated to a reforming temperature, or otherwise caused reach or stay at a reforming temperature while being placed between two cooperating mold halves 50, and 52. One of the mold halves 50 comprises a positive or male mold surface 54 including an array of protrusions 56. The mold halves 50, 52 are then brought together by pressing them together in the direction P as labeled, resulting in press-reforming of the sheet 42 with the array of protrusions 56 pressed against and in contact with respective inner concave surfaces 45 of the resulting protruding shell structures 43 formed in the (now reformed) glass sheet 44. Because of the relatively large (and in this case rectangular) recess 58 in the other or female mold half 52, large enough to contain both the protrusions 56 and the reformed glass sheet 44 without contacting the reformed glass sheet 44 within the recesses 58, this reforming step takes place without contacting the resulting respective outer convex surfaces 46 of the resulting formed sheet 44 with any solid object. The walls 57 that surround the recesses 58 on the other or female mold half 52 serve to push the glass sheet 42 (and 44) tight against the protrusions 56.

Figures 4A and 4B are cross-sectional representations of a mold with through-holes and an optional cooperating mold and a glass sheet being reformed according to alternative step 30b of Figure 2. As shown in Figures 4A and 4B, a glass sheet 42 is brought into contact with a holey plate 60 comprising a molding surface having an array of through holes 62. The sheet 42 is heated or otherwise maintained at a reforming temperature and pushed into the through holes 62 by the effects of a partial vacuum (represented by the arrows V) applied to the side of the holey plate 60 opposite the glass sheet 42, or by the effects of a gas pressure differential between the opposing sides of the holey plate 60, however produced. This results in the formation of protruding shell structures 43 having generally spherical convex outer surfaces 46 and generally spherical concave inner surfaces 45. In this alternative step, the resulting respective outer convex surfaces 46 (positioned in the holes 62) are formed without contact with any solid object, and the resulting respective inner concave surfaces 45 a likewise formed without contact with any solid object.

As an additional alternative to the methods shown in Figures 3A-3B and 4A-4B, the mold halves in Figures 3A-3B may be provided with a cooperating partial shearing region S in which the glass sheet 42,44 is almost but not quite sheared as the mold halves 50,52 are brought together. The result if this alternative is employed is that one or more thinned regions T are pressed into the glass sheet 44 between one or more pairs of the glass shell structures 43, so as to facilitate separation of the glass shell structures on either side of the respective one or more thinned regions at a later time. This can simplify the manufacturing process by allowing as many processes as possible (such as coating the mirror blanks with the desired reflective coating) to be performed with the mirror blanks joined together in an array, while still providing pre-formed singulation locations for allowing easy separation into individual mirrors or individual groups of mirrors. As shown in Figure 4B, a second, singulating mold 64 may optionally be used, aligned and pressed downward in the direction P, before or after the shell structures 43 have been formed, to form similar thinned regions (similar to Figure 3B but not shown in Figure 4B) between one or more of the shell structures 43.

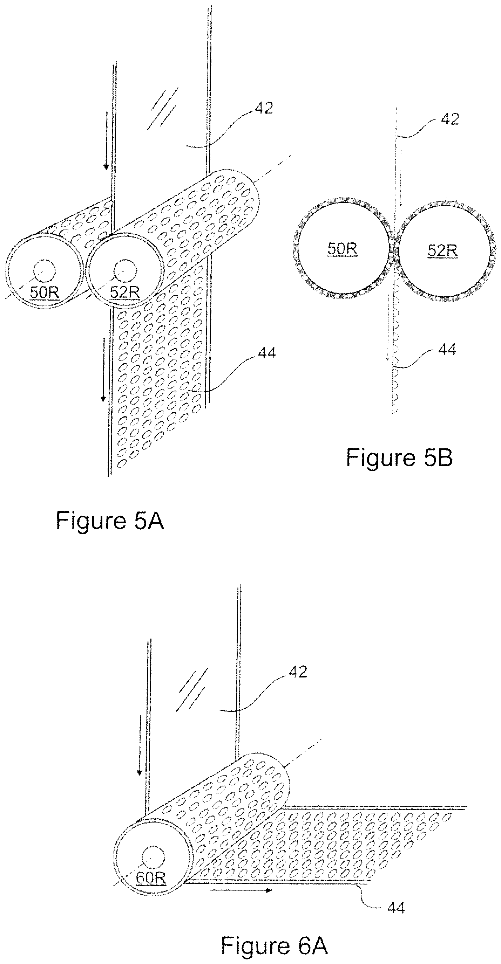

Figures 5A and 5B are perspective and cross-sectional views, respectively, illustrating reformation of a glass sheet according to yet another variation of a method according to the present disclosure. In the method of Figures 5A-5B, a sheet 42 is provided in the form of a continuous glass sheet 42 from a down draw or a fusion draw or other glass sheet-forming apparatus. The step of reforming then comprises continuous reforming using roller-based pressing similar to the pressing described with respect to Figures 3A and 3B, but with male and female roller molds50R, 52R functioning in the place of planar molds 50, 52.

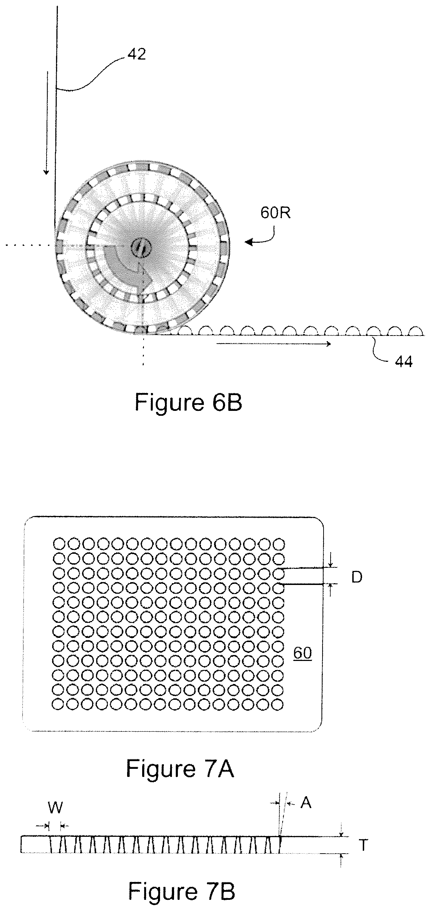

Figures 6A and 6B are perspective and cross-sectional views, respectively, illustrating reformation of a glass sheet according to still another embodiment or variation of a method according to the present disclosure. In the method of Figures 6A-6B, a sheet 42 is provided in the form of a continuous glass sheet 42 from a down draw or a fusion draw or other glass sheet-forming apparatus, but the step of reforming then comprises continuous reforming using either roller-based vacuum or differential-pressure forming similar to the forming described with respect to Figures 4A and 4B, but with a holey roller mold 60R in place of the holey planar mold 60. Figure 6B is enlarged somewhat to show some of the vacuum line plumbing within the roller mold 60R. The individual holes at a given position along the circumference are provided with vacuum at the same time, by a vacuum valve near the center of roller 60R, which valve connects a vacuum source holes corresponding to about ¼ turn of the roller (where the solid arrow is shown). Accordingly, as the roller 60R turns, the glass sheet 42 is vacuum formed within the ¼ turn of contact with the roller 60R, and the vacuum is released at the end of the contact region.

Figures 7A and 7B are plan and cross-sectional views, respectively, of an embodiment of a holey mold plate 60 useful in conjunction with the methods described with respect to Figures 4A-4B. For good release of the formed glass sheet 44 from the plate 60, the through holes desirably have wall angle A, relative to the perpendicular to the plate as shown, of about 15± 5°. Particularly useful distance D between the holes is in the range of 7.5 ± 2.5 mm, with a width at the top or widest part of the holes of 5.5 ± 1.5 mm. Thickness of the plate 60 may be around 10 ± 5 mm.

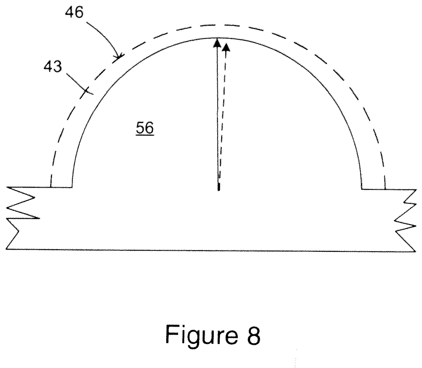

Figure 8 is a cross-sectional view of a protrusion 56 on a mold surface such as those used in the methods of Figures 3A-3B and 5A-5B. Because the only pristine surface is the convex or outer surface 46 in this method, the shape of surface 46 is critical. Accordingly, it is desirable that the actual radii (solid line) of the protrusion 56 be larger near the top of the protrusion (the point furthest from the base of the protrusion) relative to the nominally exact radii (dashed line) at that location, whether the desired shape for the mirror blank is spherical or elliptical. This is because the glass sheet, during forming, will thin more, to some degree, at the top of the protrusion 56 than at the sides, and by adjusting the relative length of the radii away from the ideal, a more ideal shape can be achieved for surface 46.

For the purposes of describing and defining the present invention it is noted that the terms "approximately," "relatively," and "substantially" are utilized herein to represent the inherent degree of uncertainty that may be attributed to any quantitative comparison, value, measurement, or other representation. The terms "approximately," "relatively," and "substantially" are also utilized herein to represent the degree by which a quantitative representation may vary from a stated reference without resulting in a change in the basic function of the subject matter at issue.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

It is noted that recitations herein of a component of the present disclosure being "configured" in a particular way, to embody a particular property, or function in a particular manner, are structural recitations, as opposed to recitations of intended use. More specifically, the references herein to the manner in which a component is "configured" denotes an existing physical condition of the component and, as such, is to be taken as a definite recitation of the structural characteristics of the component.

It is noted that terms like "preferably," "commonly," and "typically," when utilized herein, are not utilized to limit the scope of the claimed invention or to imply that certain features are critical, essential, or even important to the structure or function of the claimed invention. Rather, these terms are merely intended to identify particular aspects of an embodiment of the present disclosure or to emphasize alternative or additional features that may or may not be utilized in a particular embodiment of the present disclosure.

Having described the subject matter of the present disclosure in detail and by reference to specific embodiments thereof, it is noted that the various details disclosed herein should not be taken to imply that these details relate to elements that are essential components of the various embodiments described herein, even in cases where a particular element is illustrated in each of the drawings that accompany the present description. Rather, the claims appended hereto should be taken as the sole representation of the breadth of the present disclosure and the corresponding scope of the various inventions described herein. Further, it will be apparent that modifications and variations are possible without departing from the scope of the invention defined in the appended claims. More specifically, although some aspects of the present disclosure are identified herein as preferred or particularly advantageous, it is contemplated that the present disclosure is not necessarily limited to these aspects.

It is noted that one or more of the following claims utilize the term "wherein" as a transitional phrase. For the purposes of defining the present invention, it is noted that this term is introduced in the claims as an open-ended transitional phrase that is used to introduce a recitation of a series of characteristics of the structure and should be interpreted in like manner as the more commonly used open-ended preamble term "comprising."

It is to be understood that the embodiments and claims are not limited in application to the details of construction and arrangement of the components set forth in the description and / or illustrated in drawings or data (if provided). Rather, the description, any drawings or schematics, and/or data provide examples of the embodiments envisioned, but the claims are not limited to any particular embodiment or a preferred embodiment disclosed and / or identified in the specification. Any drawing figures that may be provided are for illustrative purposes only, and merely provide practical examples of the invention disclosed herein. Therefore, any drawing figures provided should not be viewed as restricting the scope of the claims to what is depicted.

The embodiments and claims disclosed herein are further capable of other embodiments and of being practiced and carried out in various ways, including various combinations and sub-combinations of the steps and/or features described above but that may not have been explicitly disclosed in specific combinations and sub-combinations. Accordingly, those skilled in the art will appreciate that the conception upon which the embodiments and claims are based may be readily utilized as a basis for the design of other structures, methods, and systems. In addition, it is to be understood that the phraseology and terminology employed herein are for the purposes of description and should not be regarded as limiting the claims.

## Claims

1. A method of producing glass focusing mirror blanks, the method comprising:
providing a glass sheet (42);
heating the glass sheet (42) or otherwise providing for the temperature of the glass sheet (42) to be near the softening point of the glass so as to allow permanent deformation thereof; and
reforming the glass sheet (42) so as to form an array of glass shell structures (43) therein by vacuum or differential-pressure forming the glass sheet (42), the respective resulting glass shell structures (43) each having a respective outer convex surface (46) and a respective inner concave surface (45),
wherein the step of vacuum or differential-pressure forming is performed using a mold surface (60) comprising an array of through holes (62) with the shell structures (43) formed by vacuum or differential pressure forming of the sheet (42) against the mold surface (60) with the glass shell structures (43) formed into the array of through holes (62) without contacting the resulting respective inner concave surfaces (45) with any solid object,
**characterized in that** the step of vacuum or differential-pressure forming is also performed without contacting the resulting respective outer convex surfaces (46) with any solid object.

2. A method of producing glass focusing mirror blanks, the method comprising:
providing a glass sheet (42);
heating the glass sheet (42) or otherwise providing for the temperature of the glass sheet (42) to be near the softening point of the glass so as to allow permanent deformation thereof; and
reforming the glass sheet (42) so as to form a reformed glass sheet (44) having an array of glass shell structures (43) therein by pressing the sheet (42), the respective resulting glass shell structures (43) each having a respective outer convex surface (46) and a respective inner concave surface (45),
**characterized in that** the step of pressing is performed using a mold half (50) having a male mold surface (54) comprising an array of protrusions (56) and a female mold half (52) having recesses (58) and walls (57) surrounding said recesses (58), said recesses (58) being large enough to contain both the protrusions (56) of the male mold surface (54) and the reformed glass sheet (44) without contacting said reformed glass sheet (44) within said recesses (58), the male mold surface (54) of said mold half (50) being pressed against and in contact with the respective inner concave surfaces (45), the walls (57) of the female mold (52) which surround said recesses (58) pushing the glass sheet (42) and then the resulting reformed glass sheet (44) tight against the protrusions (56) of the male mold surface (54), without contacting the resulting respective outer convex surfaces (46) with any solid object.

3. The method of claim 1 or 2 further comprising pressing one or more thinned regions (T) into the glass sheet (44) between one or more pairs of the glass shell structures (43) so as to facilitate separation of the glass shell structures (43) on either side of the respective one or more thinned regions (T).

4. The method according to any of claim 1-3 wherein the step of providing a glass sheet (42) comprises providing a continuous glass sheet from a down draw or a fusion draw or other glass sheet-forming apparatus, and where the step of reforming comprising continuous reforming using either (1) roller-based (50R, 52 R) pressing or (2) roller-based (60R) vacuum or differential-pressure forming.

5. The method according to any of claims 1, 3 and 4 wherein the step of vacuum or differential-pressure forming comprises forming the sheet (42) against the mold surface (60) comprising an array of holes (62), the through holes (62) having a side-wall angle in the range of from 15 ± 5°.

6. The method according to any of claims 2-4 wherein the step of pressing comprises pressing using a positive mold comprising an array of spherical protrusions.

7. The method according to any of claims 2-4 wherein the step of pressing comprises pressing using a positive mold comprising an array of elliptical protrusions.

8. The method according to either of claims 6 and 7 wherein the respective protrusions (56) vary from a respective ideal spherical or elliptical shape by having a longer radius toward the top of the respective protrusion relative to the nominally ideal radius at that location.

9. The method according to any of claims 1-8 wherein the mold surface comprises carbon.

10. The method according to claim 9 wherein the mold surface comprises polished carbon.

11. The method according to any of claims 1-10 wherein the step of providing a glass sheet (42) comprises providing a glass sheet having a surface roughness of not greater than 20 nm rms.

12. The method according to any of claims 1-11 wherein the step of providing a glass sheet (42) comprises providing a glass sheet having a surface roughness of not greater than (10 nm)/ | N1-N2 | where N1 is the index of refraction of an optical material intended for use in contact with the respective inner concave surfaces and N2 is the index of refraction of the glass sheet.

## Patentansprüche

1. Verfahren zum Herstellen von Glasfokussierspiegelrohlingen, wobei das Verfahren umfasst:
Bereitstellen einer Glasscheibe (42),
Erhitzen der Glasscheibe (42) oder anderweitiges Bereitstellen der Temperatur der Glasscheibe (42) so, dass sie sich nahe des Erweichungspunktes des Glases befindet, um so ihre dauerhafte Verformung zu ermöglichen, und
Umformen der Glasscheibe (42), um so eine Anordnung von Glasschalenstrukturen (43) darin durch Vakuum- oder Differentialdruckformen der Scheibe (42) zu formen, wobei die entsprechenden resultierenden Glasschalenstrukturen (43) jeweils eine entsprechende äußere konvexe Oberfläche (46) und eine entsprechende innere konkave Oberfläche (45) aufweisen,
wobei der Schritt des Vakuum- oder Differentialdruckformens unter Verwendung einer Formoberfläche (60) durchgeführt wird, die eine Anordnung von Durchgangsöffnungen (62) umfasst, wobei die Schalenstrukturen (43) durch Vakuum- oder Differentialdruckformen der Scheibe (42) gegen die Formoberfläche (60) geformt werden, wobei die Glasschalenstrukturen (43) in die Anordnung von Durchgangsöffnungen (62) geformt werden, ohne dass die resultierenden entsprechenden inneren konkaven Oberflächen (45) mit einem festen Gegenstand in Kontakt stehen,
**dadurch gekennzeichnet, dass** der Schritt des Vakuum- oder Differentialdruckformens auch durchgeführt wird, ohne dass die resultierenden entsprechenden äußeren konvexen Oberflächen (46) mit einem festen Gegenstand in Kontakt stehen.

2. Verfahren zum Herstellen von Glasfokussierspiegelrohlingen, wobei das Verfahren umfasst:
Bereitstellen einer Glasscheibe (42),
Erhitzen der Glasscheibe (42) oder anderweitiges Bereitstellen der Temperatur der Glasscheibe (42) so, dass sie sich die nahe des Erweichungspunktes des Glases befindet, um so ihre dauerhafte Verformung zu ermöglichen, und
Umformen der Glasscheibe (42), um so eine umgeformte Glasscheibe (44), die eine Anordnung von Glasschalenstrukturen (43) darin aufweist, durch Pressen der Scheibe (42) zu formen, wobei die entsprechenden resultierenden Glasschalenstrukturen (43) jeweils eine entsprechende äußere konvexe Oberfläche (46) und eine entsprechende innere konkave Oberfläche (45) aufweisen,
**dadurch gekennzeichnet, dass** der Schritt des Pressens ausgeführt ist, unter Verwendung einer Formhälfte (50), die eine Patrizenoberfläche (54) aufweist, die ein Anordnung von Vorsprüngen (56) umfasst, und einer Matrizenhälfte (52), die Ausnehmungen (58) und Wände (57) aufweist, welche die Ausnehmungen (58) umgeben, wobei die Ausnehmungen (58) groß genug sind, um sowohl die Vorsprünge (56) der Patrizenoberfläche (54) und die umgeformte Glasscheibe (44) zu enthalten, ohne dass sie mit der umgeformten Glasscheibe (44) innerhalb der Ausnehmungen (58) in Kontakt stehen, wobei die Patrizenoberfläche (54) der Formhälfte (50) gegen die entsprechenden inneren konkaven Oberflächen (45) gepresst wird und mit ihnen in Kontakt steht, wobei die Wände (57) der Matrize (52), welche die Ausnehmungen (58) umgeben, die Glasscheibe (42) und dann die resultierende umgeformte Glasscheibe (44) fest gegen die Vorsprünge (56) der Patrizenoberfläche (54) drücken, ohne dass die resultierenden entsprechenden äußeren konvexen Oberflächen (46) mit einem festen Gegenstand in Kontakt stehen.

3. Verfahren nach Anspruch 1 oder 2, das ferner das Pressen einer oder mehrerer ausgedünnter Regionen (T) in die Glasscheibe (44) zwischen ein oder mehrere Paare Glasschalenstrukturen (43) umfasst, um so die Trennung der Glasschalenstrukturen (43) auf einer der entsprechenden einen oder mehreren ausgedünnten Regionen (T) zu erleichtern.

4. Verfahren nach einem der Ansprüche 1 bis 3, wobei der Schritt des Bereitstellens einer Glasscheibe (42) das Bereitstellen einer kontinuierlichen Glasscheibe von einer Tiefzieh- oder einer Schmelzzieh- oder einer anderen Glasscheibenformeinrichtung umfasst, und wobei der Schritt des Umformens das kontinuierliche Umformen entweder unter Verwendung des (1) walzenbasierten (50R, 52R) Pressens oder (2) walzenbasierten (60R) Vakuum- oder Differentialdruckformens umfasst.

5. Verfahren nach einem der Ansprüche 1, 3 und 4, wobei der Schritt des Vakuum- oder Differentialdruckformens das Formen der Scheibe (42) gegen die Formoberfläche (60) umfasst, die eine Anordnung von Öffnungen (62) umfasst, wobei die Durchgangsöffnungen (62) einen Seitenwandwinkel in dem Bereich von 15 ± 5° aufweisen.

6. Verfahren nach einem der Ansprüche 2 bis 4, wobei der Schritt des Pressens das Pressen unter Verwendung einer positiven Form umfasst, die eine Anordnung von kugelförmigen Vorsprüngen umfasst.

7. Verfahren nach einem der Ansprüche 2 bis 4, wobei der Schritt des Pressens das Pressen unter Verwendung einer positiven Form umfasst, die eine Anordnung von elliptischen Vorsprüngen umfasst.

8. Verfahren nach einem der Ansprüche 6 oder 7, wobei die entsprechenden Vorsprünge (56) zwischen einer entsprechenden idealen kugelförmigen oder elliptischen Form variieren, indem sie in Bezug auf den nominal idealen Radius an dieser Stelle einen längeren Radius in Richtung der Spitze des entsprechenden Vorsprungs aufweisen.

9. Verfahren nach einem der Ansprüche 1 bis 8, wobei die Formoberfläche Kohlenstoff umfasst.

10. Verfahren nach Anspruch 9, wobei die Formoberfläche polierten Kohlenstoff umfasst.

11. Verfahren nach einem der Ansprüche 1 bis 10, wobei der Schritt des Bereitstellens einer Glasscheibe (42) das Bereitstellen einer Glasscheibe umfasst, die eine Oberflächenrauigkeit von nicht mehr als 20 nm rms aufweist.

12. Verfahren nach einem der Ansprüche 1 bis 11, wobei der Schritt des Bereitstellens einer Glasscheibe (42) das Bereitstellen einer Glasscheibe umfasst, die eine Oberflächenrauigkeit von nicht mehr als (10 nm)/|N1-N2| aufweist, wobei N1 der Brechungsindex eines optischen Materials ist, das für die Verwendung in Kontakt mit den entsprechenden konkaven Oberflächen bestimmt ist, und N2 der Brechungsindex der Glasscheibe ist.

## Revendications

1. Procédé de production d'ébauches de miroirs de focalisation en verre, le procédé comprenant :
la fourniture d'une feuille de verre (42) ;
le chauffage de la feuille de verre (42) ou sinon faire de sorte que la température de la feuille de verre (42) soit proche du point de ramollissement du verre afin de permettre une déformation permanente de celle-ci ; et
la reformation de la feuille de verre (42) afin de former une rangée de structures de coques de verre (43) dans celle-ci par formation sous vide ou sous pression différentielle de la feuille de verre (42), les structures de coques de verre résultantes respectives (43) présentant chacune une surface convexe extérieure respective (46) et une surface concave interne respective (45),
dans lequel l'étape de formation sous vide ou pression différentielle est réalisée en utilisant une surface de moule (60) comprenant une rangée de perforations (62) avec les structures de coques (43) formées par formation sous vide ou pression différentielle de la feuille (42) contre la surface de moule (60) avec les structures de coques de verre (43) formées dans la rangée de perforations (62) sans contact des surfaces concaves internes respectives résultantes (45) avec un objet solide quelconque,
**caractérisé en ce que** l'étape de formation sous vide ou pression différentielle est également réalisée sans contact des surfaces convexes externes respectives résultantes (46) avec un objet solide quelconque.

2. Procédé de production d'ébauches de miroirs de focalisation en verre, le procédé comprenant :
la fourniture d'une feuille de verre (42) ;
le chauffage de la feuille de verre (42) ou sinon faire de sorte que la température de la feuille de verre (42) soit proche du point de ramollissement du verre afin de permettre une déformation permanente de celle-ci ; et
la reformation de la feuille de verre (42) afin de former une feuille de verre reformée (44) ayant une rangée de structures de coques de verre (43) dans celle-ci en pressant la feuille (42), les structures de coques de verre résultantes respectives (43) ayant chacune une surface convexe externe respective (46) et une surface concave interne respective (45),
**caractérisé en ce que** l'étape de pression est réalisée en utilisant une moitié de moule (50) présentant une surface de moule mâle (54) comprenant une rangée de protubérances (56) et une moitié de moule femelle (52) présentant des creux (58) et des parois (57) entourant lesdits creux (58), lesdits creux (58) étant assez larges pour contenir à la fois les protubérances (56) de la surface de moule mâle (54) et la feuille de verre reformée (44) sans contact de ladite feuille de verre reformée (44) dans lesdits creux (58), la surface de moule mâle (54) de ladite moitié de moule (50) étant pressée contre et en contact avec les surfaces concaves internes respectives (45), les parois (57) du moule femelle (52) qui entourent lesdits creux (58) poussant la feuille de verre (42) et ensuite la feuille de verre reformée résultante (44) de manière serrée contre les protubérances (56) de la surface de moule mâle (54), sans contact des surfaces convexes externes respectives résultantes (46) avec un objet solide quelconque.

3. Procédé selon la revendication 1 ou 2 comprenant de plus la pression d'une ou plusieurs régions amincies (T) dans la feuille de verre (44) entre une ou plusieurs paires des structures de coques de verre (43) afin de faciliter la séparation des structures de coques de verre (43) sur chaque côté des une ou plusieurs régions amincies respectives (T).

4. Procédé selon l'une quelconque des revendications 1-3, dans lequel l'étape de fourniture d'une feuille de verre (42) comprend la fourniture d'une feuille de verre continue à partir d'un étirage vers le bas ou d'un appareil de formation de feuille de verre à étirage de fusion ou autre, et où l'étape de reformation comprend une reformation continue en utilisant soit (1) une pression à base de rouleau (50R, 52R) soit (2) une formation sous vide ou pression différentielle à base de rouleau (60R).

5. Procédé selon l'une quelconque des revendications 1, 3 et 4, dans lequel l'étape de formation sous vide ou pression différentielle comprend la formation de la feuille (42) contre la surface de moule (60) comprenant une rangée de perforations (62), les perforations (62) présentant un angle de paroi latérale dans l'intervalle de 15 ± 5°.

6. Procédé selon l'une quelconque des revendications 2-4, dans lequel l'étape de pression comprend la pression en utilisant un moule positif comprenant une rangée de protubérances sphériques.

7. Procédé selon l'une quelconque des revendications 2-4, dans lequel l'étape de pression comprend la pression en utilisant un moule positif comprenant une rangée de protubérances elliptiques.

8. Procédé selon l'une quelconque des revendications 6 et 7, dans lequel les protubérances respectives (56) varient d'une forme sphérique ou elliptique idéale respective en présentant un rayon plus long vers le haut de la protubérance respective par rapport au rayon nominalement idéal à cet endroit.

9. Procédé selon l'une quelconque des revendications 1-8, dans lequel la surface de moule comprend du carbone.

10. Procédé selon la revendication 9, dans lequel la surface de moule comprend du carbone poli.

11. Procédé selon l'une quelconque des revendications 1-10, dans lequel l'étape de fourniture d'une feuille de verre (42) comprend la fourniture d'une feuille de verre présentant une rugosité de surface qui n'est pas supérieure à 20 nm rms.

12. Procédé selon l'une quelconque des revendications 1-11, dans lequel l'étape de fourniture d'une feuille de verre (42) comprend la fourniture d'une feuille de verre présentant une rugosité de surface d'au plus (10 nm)/|N1-N2| où N1 est l'indice de réfraction d'un matériau optique destiné à être utilisé en contact avec les surfaces concaves internes respectives et N2 est l'indice de réfraction de la feuille de verre.
